# EUROPEAN PATENT SPECIFICATION

(11) **EP 1 499 691 B1**
(45) Date of publication and mention of the grant of the patent: **07.11.2007**
(21) Application number: 03725071.9
(22) Date of filing: 22.04.2003
(51) Int. Cl.: C09D 175/04, C08L 75/04, C08G 18/08, B60J 10/00

(54) **USE OF AN AQUEOUS COATING COMPOSITION FOR THE MANUFACTURE OF SURFACE COATINGS OF SEALS**
VERWENDUNG EINER WÄSSRIGEN BESCHICHTUNGSZUSAMMENSETZUNG FÜR DIE HERSTELLUNG VON OBERFLÄCHENBESCHICHTUNGEN VON DICHTUNGEN
UTILISATION D'UNE COMPOSITION AQUEUSE DE REVETEMENT DANS LA PREPARATION DE REVETEMENTS DE SURFACE DE JOINTS

(30) Priority: 26.04.2002 DE 10218866
(43) Date of publication of application: 26.01.2005
(73) Proprietor: Momentive Performance Materials GmbH, 51368 Leverkusen (DE)
(72) Inventor: KÄSLER, Karl-Heinz, 51375 Leverkusen (DE); HUGGINS, John, Mitchell, 51373 Leverkusen (DE); STEEDMAN, Adrian-Malcolm, NL-4631 CN Hoogerheide (NL)
(86) International application number: PCT/EP2003/004157
(87) International publication number: WO 2003/091349

(56) References cited:
- WO-A-01/23482
- US-A- 4 528 390
- US-A- 5 182 174
- US-A- 5 827 921

## Description

The present invention relates to the use of an aqueous coating composition, comprising a film forming binder system, containing at least one crosslinkable resin and optionally at least one crosslinking agent, and spherical particles comprising a specific polyalkylsiloxane for the manufacture of surface coatings of seals, a process for the manufacture of coated seals, and the coated seals obtained by such process. The coating compositions provide protective or slipping, non leachable and non blocking films or property enhancing coatings on flexible substrates for seals, such as leather, leather substitutes, natural rubber, synthetic rubbers, or flexible plastics. The coatings are capable of imparting non-sticking, water-repelling, abrasion-resistance, and surface slip properties.

### BACKGROUND OF THE INVENTION

Flexible materials such as leather, leather substitutes, natural rubber, synthetic rubbers and other elastomeric materials that exhibit improved abrasion resistance and surface slip properties are required for a number of industrial applications. In one such application, for example, rubber seals of car doors and window wells for moving glass parts in automobiles, this problem has been traditionally met through flocking the surface with fibers, which reduces friction and thereby eliminates sticking effects. The flocking process, however, is expensive and adds several steps to the manufacturing process.

Recently, different approaches have been taken to meet these needs without flocking. A variety of solvent based coating compositions incorporating various polymeric materials and slip enhancing additives have been proposed.

US 4572871 and 4572872 describe heat cured, solvent dilutable paint compositions comprising: (A) an urethane polymer, (B) a castor oil polyol, (C) an urethane prepolymer having isocyanate, (D) a fluorocarbon resin, (E) a silicone oil and (F) silica, clay, or calcium carbonate. The fluorocarbon resin (D) includes polytetrafluoroethylene, tetrafluoroethylene/hexafluoropropylene copolymer, polytrifluoro-chloro-ethylene, and polyvinylidene fluoride.

US 4987204 describes a solvented coating composition comprising a urethane prepolymer which is the reaction product of a polyol and a polyisocyanate, a fluororesin, a silicone oil, a halogenating agent and a solvent.

US 5441771 describes a solvented, moisture-hardening one-component polyurethane coating composition, consisting of polyfunctional isocyanate compounds and, optionally, auxiliaries and/or coupling agents. The compositions according to this invention optionally contain polysiloxanes and surfactants to improve their surface-slip properties.

EP-A-482480 describes solvented coating composition, comprising a polyorganosiloxane with a glycidoxy group and/or an epoxycyclohexyl group, a amino functional alkoxy silane and/or siloxane, a mercapto functional alkoxy silane and/or siloxane, a hydroxy terminated polydiorganosiloxane, a polyorganohydrogensiloxane having at least three silicon-bonded hydrogen atoms per molecule, and a curing catalyst.

US 6071990 describes heat curable, solvent-based coating composition consisting of an epoxy resin, an amine functional silane, an organometallic catalyst and an OH-terminated polydiorganosiloxane, which when applied to a rubber surface and cured thereon, forms an abrasion resistant film adherent to the surface and having good freeze-release properties.

US 4652618 describes solvented coating compositions for protective coatings for plastic substrates, comprising a polydiorganosiloxane having hydroxy groups, a curing agent substituted by an epoxy-containing group and a polymethylsilsesquioxane having a mean particle diameter of 0.1 to 100 micron. The polymethylsilsesquioxane claimed diminishs the surface luster while providing surface sliding properties.

US 5115007 describes a heat curable, solvented, primerless, one-part, abrasion resistant coating composition which is useful as a low friction, environmentally stable coating for elastomeric substrates, comprising a blocked polyurethane prepolymer, a crosslinking agent, and a silicone oil. Described are also additives, such as micropowders of fumed silica, Nylon^{®}, polyethylene, Teflon, polystyrene, molybdenum disulfide, glass beads, and the like.

US 4902767 describes a solvented, heat curable, abrasion resistant coating composition, comprising a reaction product of a functional polydialkyl-substituted polysiloxane, a polyisocyanate and an polyol. These coating compositions may also include additives, such carbon black, teflon powder, polyethylene powder, talcum powder or graphite.

US 4945123 describes a coating, comprising a urethane coating material, a silicone oil, a fluorocarbon resin powder and a polyethylene powder.

EP-A-657517 describes a solvented, heat curable silicone coating composition, comprising a diorganopolysiloxane, a mixture of hydrolysis functional silanes and/or a siloxanes, amino functional silane, a condensation catalyst and a microparticulate powder having a mean particle size of up to 50 microns. Whereby the powder is generally made of synthetic resins such as polycarbonate, Nylon^{®}, polyethylene, Teflon TM, (PTFE) polyacetal, polymethylsilsesquioxane and inorganic materials such as silica, zirconia and alumina. Preferred among these is polycarbonate resin powder. The powder is claimed to be effective for improving the abrasion resistance, eliminating gloss and reducing a tacky feel on the coating surface.

EP-A-293084 describes a one-pack solvented coating composition, comprising a polydialkyl siloxane-polyurethane copolymer and a filler, selected from the group consisting of carbon black, teflon, graphite, and talcum powder.

US 5674951 describes solvented, heat curable coating composition, comprising a polyoxetane polymer having a highly fluorinated alkyl or polyether side groups, and a chain extending compound and optionally a micropowder, such as dispersions of silica, nylon, polyethylene, poly(tetrafluoroethylene), fluorinated ethylene propylene copolymers, polystyrene, molybdenum disulfide, glass beads and the like.

US 4720518 describes solvented, heat curing coating composition, comprising at least one chlorinated or brominated thermoplastic amide group containing polymer or resin and a linear or branched siloxane or silicone compound and optionally at least one finely divided material selected from the group consisting of inorganic and organic fillers and pigments having a particle size of from about 0.1 to 100. The preferred finely divided or powdered material is selected from the group consisting of pyrogenic or precipitated silica, Nylon®, such as nylon or polyamide 6, 6,6, 11 or 12, carbon black, divinylbenzene crosslinked polystyrenes and fluorocarbon resins such as polytetrafluorethylene.

US 5376454 describes a solvented, heat curable surface coating, a solid lubricant such as molybdenum disulfide, tungsten disulfide, polytetrafluoroethylene, fluorinated graphite, graphite and silicone powder, and a resin matrix consisting consisting of fluoro-olefin vinyl ether polymer resin or fluoro-olefin vinyl ether vinyl ester copolymer resin, and a curing agent.

All these coatings have one or numerous disadvantages. Coatings with polydimethylsiloxane polymeric base while giving good anti-freeze, generally low slip, excellent finish and feel, are as a rule too mechanically weak and do not provide adequate abrasion resistance. Also under extreme weather conditions, such as heat, cold, wind and rain, to which the elastomeric part is normally exposed, coating compositions with silicones or fluorocarbon polymers that are not chemically bonded within the coating film, will gradually be lost, which leads to a reduction in the surface slip of the elastomeric part and is undesirable. Silicone oils are also known to bleed to the surfaces of coatings and from there are physically transferred to nearby surfaces where they can interfere with subsequent coating or finishing operations. The high cost of fluorocarbon polymers, and additives is a disadvantage in many of these coatings.

All these coatings have the disadvantage of being solvent based and thus do not meet the industry requirements for low volatile organic content (VOC) coating materials and are not environmentally friendly. In addition, some of these coatings contain halogenated polymers that are not considered to be environmentally friendly.

Water-based silicone coatings have also been proposed in US 5525427 and US 5366808 but these have all of the disadvantages of poor abrasive strength and bleeding that solvented silicone coatings exhibit.

Solvent free and water-based coatings, in particular of polyurethane compositions are well known as coatings for flexible substrates.

US 6084034 describes a solvent free urethane-resin based coating which includes a urethane resin and powder. The coating is applied to a shaped article and then heat cured. The invention uses a first powder that has a melting point lower than the certain temperature and a solubility parameter which is smaller than or larger than that of the urethane paint by at least 0.5. The coating optionally contains a second powder with a higher melting point. The coating provides the shaped article with low friction, irrespective of the coating film's thickness. The first powder of this invention is comprised of 11-Nylon^{®} or 12-Nylon^{®} and has a particle size of 5 to 500 µm. The second optional powder can be taken from the group consisting of 6-Nylon^{®}, 6,6-Nylon^{®}, polytetrafluoroethylene, polycarbonate, or an epoxy resin.

This invention has numerous disadvantages. Firstly, the coating is solventless and therefore of relatively high viscosity, making these coatings not applicable by standard spray technologies and leading to high coating thicknesses of 50-100 µm. High coating thicknesses are hard to apply evenly and lead to excessive costs. Secondly, the low friction observed is highly dependent upon the melting and resolidification of the first powder on or near the coating surface under specific application conditions of temperature and time. These application parameters are difficult to maintain in an industrial production environment, leading to poor product consistency.

US 6284836 describes aqueous polyurethane dispersions composed of a mixture of polyols, an aliphatic polyisocyanate, a diol having a molecular weight of less than 450 g/mol and which carries one or more ionic groups, an amine, water and optionally a monoalcohol. This coating is useful for application to flexible substrates such as leather, wood, paper, textiles, plastics or metal. These coatings are characterized by a high degree of abrasion resistance but also a high coefficient of friction.

EP-A-278278 also describes water-based polyurethane coating compositions, comprising a mixture of polyols, an anionic functional diol or diamine and an organic diisocyanate.

US 5312865 describes an aqueous polyurethane coating composition wherein the polyurethane is prepared from a mixture of polycaprolactone diols and an isocyanate mixture. These water-based polyurethane coatings exhibit good to excellent abrasion resistance, but fail to provided adequate anti-freeze or surface slip properties.

WO 00/15728 discloses heat-activatable thermoplastic polyurethane having melting point of 40 to 100°C containing Tospearls (silsesquioxane) which are able to optimize blocking and sealing properties of a coated foil, dto. WO 01/76868.

EP-A-547893 discloses a thermal transfer printing dye sheet comprising a heat-resisting slipping layer comprising a silicone resin powder having silsequioxane structure and a metal salt powder of higher fatty acid and a metal salt powder of a metal salt powder of a higher fatty acid phosphate.

US 6013724 describes a coating composition comprising a tetramethoxy partial hydrolyzed condensate and a binder for the manufacture of a raindrop fouling resistant paint film.

WO 02/10292 discloses scratch resistant topcoats with multi component coatings comprising radiation and thermally curing binder and inorganic particles for automotive top coats, dto. WO 01/09260, WO 01/09231, WO 01/09259.

WO 01/23482 describes aqueous of poly-urethane compositions which comprises inter alia means for improving the sliding behaviour which means include powdered polydialkylsiloxane.

US 6323271 discloses polyester resins containing silica having reduced stickiness.

US 5778295 and US 5956555 describe a toner fusing belt, comprising a polyimide substrate belt, an intermediate layer formed onto said polyimide substrate and a surface layer comprising a silsequioxane polymer.

Although a number of slip additives, including silicone fluids, resins or powders, fluorocarbon resins and Nylon or fluorocarbon powders or the like, are known for organic solvent based coating compositions providing adequate properties for the cured coating, attempts to incorporate these same additives into water-based coatings, in particular, polyurethane-based coatings gave either coating compositions with inferior properties of the cured coating or requires expensive organofunctional siloxanes.

The object of the present invention is to overcome the foregoing problems and provide a coating for seals having preferably flexible or elastomeric substrates which coating provides superior abrasion resistance, anti-freeze and improved surface slip properties, and which can be applied by a simple, environmentally friendly process, which doesn't bleed visible liquid or give any leachable siloxanes. In addition the coating compositions must provided superior storage stabi-lity, be pigmentable, and exhibit an adequate room temperature bath life while curing rapidly at elevated temperatures.

For providing a coated seal, which shall be used in particular to seal moveable parts, for example moveable glass components, for example windows of cars, it is necessary to find a flexible coating composition which has at the same time an excellent adhesion to the seal substrate and excellent slipping properties in order to reduce the forces ocurring on moving the moveable parts along the sealing. Surprisingly at has been found that a coating composition comprising specific spherical particles of a specific polyalkylsiloxane at the same time provides excellent adhesion to the seal substrate and excellent slipping properties to moveable parts which move along the seals.

Further it has been surprisingly found that silsequioxane particles without reactive groups could be fixed in a flexible coating layer giving abrasion resistance which is sufficient for the application as seals for moveable parts.

Further it was surprisingly found that the specifically selected spherical polyalkylsiloxane particles in aqueous coating compositions, in particular, polyurethane-based coating compositions were not only highly stable but also gave superior cured coating properties.

The antifriction properties of the coating composition used in the present invention are also not influenced by the presence of solvents like they are in case fluoro polymers. This allows to use an aqueous coating composition, which is preferred under the viewpoint environmental protection.

### SUMMARY OF THE INVENTION

The object of this invention can be achieved by providing a use of an aqueous coating composition, comprising
- a film forming binder system, containing at least one crosslinkable resin and optionally at least one crosslinking agent, and
- spherical particles of at least one polyalkylsiloxane comprising R¹-SiO_{3/2} groups, whereby R¹ is C1-C18 alkyl, and/or spherical particles of at least one polysiloxane which are coated with at least one polyalkylsiloxane comprising R¹-SiO_{3/2} groups, whereby R¹ is C1-C18 alkyl,
for the manufacture of surface coatings of seals.
Within the current invention the term 'aqueous coating' is to be understood as a coating containing less than 10 weight percent of organic solvent(s) based on the total weight of the aqueous composition, preferably less than 6 weight percent, more preferably less than 3 weight percent organic solvent(s) based on the total of the composition.

In a preferred embodiment the crosslinkable resin is selected from the group of polyester, polyether, polyesterether, polycarbonate, polyamide, polyesteramide, polyacrylate, and polyurethane each of which optionally may comprise segments of different polymeric groups.

More preferably the crosslinkable resin is a polyurethane which optionally comprises segments of polyester, polyether, polycarbonate and/or polyesteramide and having crosslinkable functional groups.

The crosslinkable functional groups of the crosslinkable resins are suitably selected from the group consisting of active hydrogen containing functional groups, olefinically unsaturated groups, isocyanate groups and epoxy groups. Among those crosslinkable functional groups of the crosslinkable resins active hydrogen containing functional groups selected from hydroxyl and amino groups are preferred.

The aqueous coating composition to be used in accordance with the present invention optionally comprises a crosslinking agent, which is able to crosslink the crosslinkable resin. Therefore, the crosslinking agent will be selected depending on the functional groups of the crosslinkable resin. In a preferred embodiment of the invention the crosslinking agent is selected from the group consisting of blocked or unblocked polyisocyanate, polyepoxides, aminoplasts, phenol/formaldehyde adducts, carbamates, compounds having at least two cyclic carbonate groups, polyols, polycarboxylic acid and polyanhydrides. Crosslinking agents are also silanes, alkoxysilanes or alkoxysiloxanes with the organofunctional groups of the crosslinking agents mentioned before.

A preferred binder system to be used in the aqueous coating composition comprises a crosslinkable polyol and/or polyamine resin and a polyisocyanate crosslinking agent.

Polyols include for example polyurethane polyols, polyurethaneurea polyols, polyacrylate polyols, polyesterurethane polyols, polyester polyols, polyether polyols, polyetherester polyols, polycarbonate polyols and polyesteramide polyols.

Polyamines include for example polyurethane polyamines, polyurethaneurea polyamines, polyesterurethane polyamines, polyester polyamines, polyether polyamines, polyetherester polyamines, polycarbonates polyamines and polyesteramide polyamines.

Optionally other reactive polymers or copolymers, for example polyacrylamides, polyamideimides, polysulfonamides, polyureas, polyurethane ureas, polydialkylsiloxane-polyurethane copolymers and mixtures of the same, may be used as crosslinkable resins. They may be also used to replace a portion of the preferred urethane-based coating material, provided that they can be obtained as aqueous dispersions or can be emulsified and they do not adversely effect the end properties of the cured coating.

In a preferred embodiment of the invention the aqueous coating composition is a polyurethane-based coating composition. Such a polyurethane-based coating composition includes all coating compositions which lead to the formation of coatings comprising polyurethane binders (see e.g. Römpp Lexikon; Lacke und Druckfarben; Thieme; 1998); that is, two-component coatings, comprising polyisocyanates and polyols or polyamines, such as the aforementioned polyols or polyamines (wherein "poly" means two- or morefunctional) and those which are based on blocked polyisocyanates, or those based on polyurethane dispersions, wherein the polyurethane groups are at least partially already formed prior to curing.

Preferred are two-component coating compositions, comprising polyisocyanates and polyols or polyamines, preferably polyols.

An aqueous or water-based urethane coating material to be used in a preferred embodiment of the present invention is based on any of a variety of known water-based, heat curable urethane and/or urethane-urea-forming polymeric binder systems comprising aqueous dispersions of various known hydroxyfunctional polymers, polyols, polyamines, aminoalcohols, monofunctional alcohols, and one or more organic polyiso-cyanates, blocked isocyanates or isocyanate functional prepolymers and functional additives. Aliphatic polyisocyanates are preferred. Herein the water-based polyurethane systems of US 6284836, US 5312865 and EP-A-278278 are particularly preferred and are included herein by reference.

In particular, the aqueous polyurethane system of US 6284836 is preferred which comprises (A) an aqueous polyurethane dispersion comprising a polyurethane having an OH functionality of 2 to 6 and a number average molecular weight of less than 15,000 prepared by reacting (a) at least one polyol having a number average molecular weight of 500 to 6000 g/mol, (b) at least one polyol having a molecular weight of less than 500 g/mol, (c) at least one aliphatic polyisocyanate, (d) at least one diol having a molecular weight of less than 450 g/mol and bearing one or more ionic groups and/or one or more potentially ionic groups, (e) at least one amine that is reactive towards NCO groups, bears hydroxyl groups, and has an OH functionality of 1 to 6, (f) water, and (g) a C1 -C10 aliphatic monoalcohol, wherein the molar ratio of polyol (a) to the sum of polyol (b) and diol (d) is 1:1.5 to 1:4 and the molar ratio of the sum of polyol (a), polyol (b), and diol (d) to polyisocyanate (c) is 1:1.1 to 1:2.5, and (B) at least one water-dispersible aliphatic or cycloaliphatic polyisocyanate having an NCO functionality of at least 2, wherein the ratio of the OH groups of component (A) to the NCO groups of component (B) is 1:1 to 1:4.

The aforementioned polyols (a) include for example those having suitably an average molecular weight, determined as the number average, of 200-6000 g/mol, preferably 1000 to 4000, in particular 1500 to 3000 g/mol, which are selected preferably from polyesters, polyethers, polycarbonates and polyesteramides. Particularly suitable polyols of the component a) are polycarbonate diols, polylactonecarbonate diols and polytetrahydrofuran diols. Among these particularly suitable polyols, hexanediol-polycarbonate diols, caprolactone-hexanediol-polycarbonate diols and tetrahydrofuran diols are preferred, in particular those of the molar mass range 1000 to 3000 g/mol. These polyols are described in US 6284836.

Suitable amines e) are, for example, ethanolamine, propanol-amine, N-methylethanolamine, diethanolamine, N,N,N'-tris-2-hydroxyethyl-ethylen-diamine and the like. They can be used separately or in combination.

Common examples of the above mentioned polyether polyols are the polymerization products of ethylene oxide, propylene oxide, butylene oxide and copolymerization or graft polymerization products thereof and the polyether polyols obtained by condensation of polyhydric alcohols or mixtures thereof and the polyether polyols obtained by alkoxylation of polyhydric alcohols, amines, polyamines and aminoalcohols. Preferred polyols are dihydroxypolyesters of dicarboxylic acids or their anhydrides, e.g. adipic acid, succinic acid, phthalic anhydride, isophthalic acid, terephthalic acid, suberic acid, azeleic acid, sebacic acid, tetrahydrophthalic acid, maleic anhydride, dimeric fatty acids and diols, e.g. ethylene glycol, propylene glycol, 1,4-propanediol, diethylene glycol, triethylene glycol, 1,4-butanediol, 1,6-hexanediol, trimethylenepentanediol, 1,4-cyclohexanediol, 1,4-cyclohexanedimethanol, neopentyl glycol, 1,8-octanediol, poly-esters and polycarbonates based on lactones, in particular based on epsilon-caprolactone, polycarbonates as obtainable by reacting, for example, the abovementioned diols with diaryl or dialkyl carbonates or phosgene. Mixtures of different polyols with different average molecular weights may be used.

Suitable organic polyisocyanates as crosslinking agent are all aromatic and aliphatic polyisocyanates or blocked polyisocyanates. Preferred isocyanates are aliphatic isocyanates such as, for example, hexamethylene diisocyanate, butane diisocyanate, isophorone diisocyanate, 1-methyl-2,4(2,6)-diisocyanato cyclohexane, norbomane diisocyanate, 4,4'-diisocyanatodicyclohexylmethane. They can be used separately or in combination.

Also suitable polyurethane prepolymers may be used as crosslinking agents, which contain on average two or more isocyanate groups per molecule and are produced by mixing of alcohols having a functionality of 2 and higher with an excess of isocyanate compounds having a functionality of 2 and higher. The viscosity of the products may be influenced through the choice of the quantities used.

Preferred polyisocyanate crosslinkers which may be used with the above mentioned polyurethane polyols are commonly known and are described e.g. in EP-A-443138, EP-A-486881 or EP-A-540985. Preferred are polyether-modified or ionically modified biurets, allophanates, trimerized products of hexamethylene diisocyanate (HDI) or of isophorone diisocyanate (IPDI). Purely nonionic hydrophilized, polyetherurethane-containing polyisocyanates and polyether-modified water-dispersible polyisocyanates are known. Also preferred are hydrophilized polyisocyanates that have ionic groups, for example sulphonate groups (cf. for example EP-A-703255) or amino or ammonium groups (cf. for example EP-A-582166) for improving the ease of emulsification or for achieving special effects. Nonionic polyisocyanates which are modified with the aid of monofunctional polyethyleneoxide-polyethers are particularly preferred as crosslinkers.

The preferred hydrophilized polyisocyanates are preferably understood as meaning those which can be distributed in an aqueous system with only moderate shear forces - in extreme cases by simple stirring - and give a finely divided emulsion which is stable.

Suitable blocking agents for blocking the isocyanate group or urethane prepolymer are known to the art and to the literature and include various lactams having from 3 to about 12 carbon atoms, such as epsiloncaprolactam, propiolactam, dimethyl propiolactam, 2-pyrrolidone, gamma-valerolactam, epsilon-laurolactam, and the like. Another group of blocking agents include the various ketoximes having from about 3 to about 20 and desirably from 3 to about 15 carbon atoms such as: dimethyl-, methylethyl-, diisopropyl-, dicyclohexyl-ketoximine, benzophenone and the like. Various phenols, such as 4-hydroxy-(methyl) benzoate, methyl salicylate, ethyl salicylate, phenol, o-, m-, and p-cresol, nonylphenols, can also be utilized. Various cyclic ureas having a total of from 3 to 12 carbon atoms such as trimethylene or tetramethylene urea can also be utilized. can also be utilized. Still other blocking agents include enamines, various dicarbonyl compounds, benzotriazole, the various phenylimidazoles, and the like. Preferred blocking agents include caprolactam and the various ketoximes.

A preferred embodiment of the invention furthermore relates to an aqueous polyurethane system containing at least one water-dispersible, polyisocyanate crosslinker having an NCO functionality or blocked NCO functionality of at least 2, preferably 2 to 6, in particular 2.3 to 4, and at least one polyol, polyamine, aminoalcohol or mixture thereof, whereby the ratio of the sum of the OH and NH groups of the polyol and/or polyamine to the sum of the NCO groups or blocked NCO groups being 1:1 to 1:4, preferably 1:1.2 to 1:3.

The use of polyisocyanates that are not readily water-dispersible can be achieved through use appropriate emulsifiers and minimal amounts of watere miscible solvents or compatiblizers using standard emulsion equipment to make a stable emulsion.

The aqueous coating composition used in accordance with the invention comprises spherical particles of at least one polyalkylsiloxane comprising R¹-SiO_{3/2} groups, whereby R¹ is C1-C18 alkyl, and/or spherical particles of at least one polysiloxane which are coated with at least one polyalkylsiloxane comprising R¹-SiO_{3/2} groups, whereby R¹ is C1-C18 alkyl.

The preferred spherical particles consist of polyalkylsiloxane comprising R¹-SiO_{3/2} groups, whereby R¹ is C1-C18 alkyl. R¹ is C1-C18 alkyl preferably methyl, ethyl, more preferably methyl, in which alkyl groups may be replaced partially by phenyl, vinyl, allyl or the like.

R¹ is preferably methyl.

In a preferred embodiment the spherical particles of polyalkylsiloxane consist of a crosslinked polyalkylsiloxane prepared by the hydrolysis, condensation, polymerisation and/or crosslinking of alkylsilanes or alkylsiloxanes. The manufacture of such spherical particles of polyalkylsiloxane is known and for example disclosed in US 4528390, which is incorporated herein by reference.

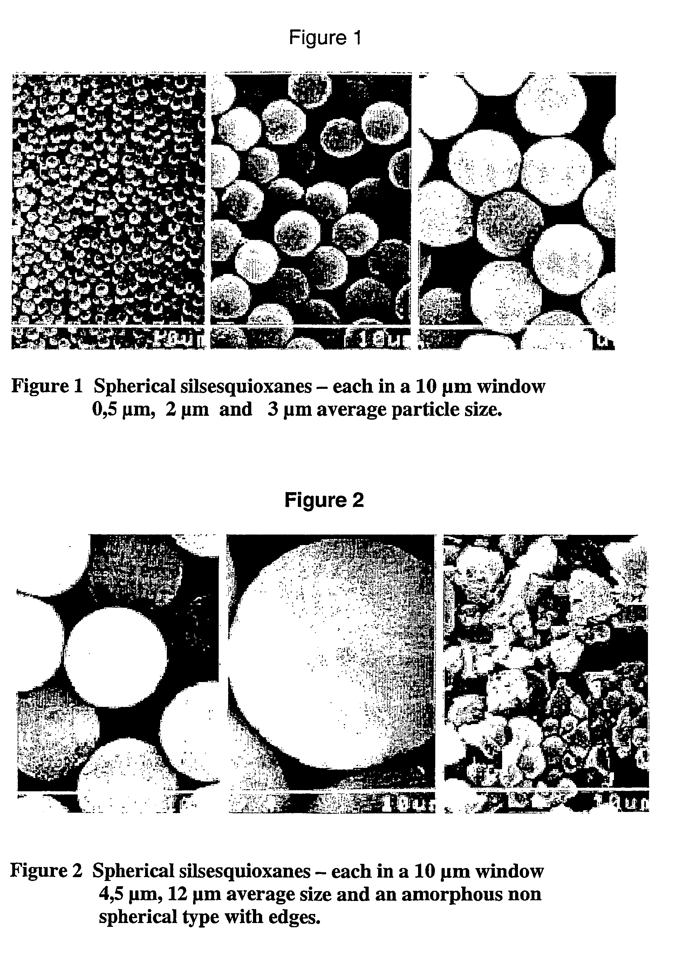

The most preferred polyalkylsiloxane is a polymethylsilsesquioxane prepared by hydrolyzing and condensing a methyltrialkoxysilane, or a hydrolysate and condensate in part thereof, in an aqueous solution of ammonia or an amine. The thus prepared product is almost free from impurities such as chlorine atoms, alkaline earth metals, and has an excellent free-flowing property and a largely spherical form as shown in fig. 1 or partially in fig. 2.

The spherical particles of this invention include also particles consisting of a polysiloxane core having a surface layer consisting of at least one polyalkylsiloxane comprising R¹-SiO_{3/2} groups, whereby R¹ is C1-C18 alkyl.

The polysiloxane core may consist of Si(O)_{4/2} (silica gel) or any crosslinked polyorganosiloxane. Preferred polyorganosiloxanes are those comprising R²-SiO_{3/2} groups. In addition they may include groups selected from (R²)₃SiO_{0,5} units, (R²)₂SiO units and SiO_{4/2} units. The amount of T-units (R²-SiO_{3/2}) of the polyorganosiloxanes in the core is preferably higher than 50 mol %, the molar range of methyl-groups of the groups R² is preferably higher than 80%, preferably the amount of the T-unit (R²-SiO_{3/2}) is higher than 60 mol %, and the molar range of methyl-groups higher than 90%.

R² is selected from R¹ and aryl, alkenyl, epoxy-, amino-, halogen-alkyl- and -cycloalkyl.

Preferred particles of the core/shell structure consist of a SiO_{4/2} core and a surface layer comprising R¹-SiO_{3/2} groups, whereby R¹ is C1-C18 alkyl. Examples are CH₃SiO_{3/2} coated particles of colloidal silica generated out of tetraalkoxysilanes or out of silicates. The layer of monoalkylpolysiloxane is applied after segregation of the core particles in the said dispersion or afterwards by spraying or using an auxiliarysolvent for distributing or dispersing core particles using e.g. alkyltrialkoxysilane or other alkylsilanes as presurcor for silsesquioxane layers of R¹-SiO_{3/2}.

Preferred particles with core-shell structure, whereby the outer particle surface layer consists of polyalkylsiloxane comprising R¹-SiO_{3/2} groups are prepared by hydrolysis, condensation, polymerization and/or crosslinking of alkylsilanes or alkysiloxanes onto a particle of another composition.

Such processes are described in US 5538793, EP-A-661334 and US 6147142 and incorporated herein by reference.

The polyorganosiloxane in the core of the spherical particles includes for example R²-SiO_{3/2} groups, wherein R² is selected from R¹ and aryl, alkenyl, epoxy-, amino-, halogen- alkyl- and -cycloalkyl. This core is coated with at least one polyalkylsiloxane comprising R¹-SiO_{3/2} groups, whereby R¹ is C1-C18 alkyl, preferably methyl. Such surface layer may have a few remaining SiOH- or minor Si-alkoxy groups.

Preferably the shell of the particles is prepared by hydrolysis, condensation, polymerization or crosslinking of alkylsilanes or alkylsiloxanes, resulting in particles having polyalkylsiloxanes as a surface layer which is predominantly composed of
R¹-Si O_{3/2} groups,
whereby R1 is C1-C18 alkyl, preferably methyl, ethyl, in which alkyl groups may be replaced partially by phenyl, vinyl, allyl, halogenalkyl or the like.

As explained above the particle surface may have some SiOH- and some minor Si-alkoxy-groups.

The content of this groups depends on the total surface area and thermal treatment after precipitation or condensation reaction.

Part of the alkyl groups of the polyalkylsiloxanes in the surface layer of the core/shell type particles or the particles consisting solely of polyalkylsiloxanes may be replaced by e.g. phenyl- or alkenyl-groups etc. They may be contained in an amount of preferably less than 20 mol percent based on all aliphatic organic groups of the polyalkylsiloxanes as long as the softening point is in the desired range as explained below. Preferably the polyalkylsiloxanes on the surface of the spherical particles essentially contain only alkyl-groups as organic groups for each Si atom. Preferably the alkyl groups in the polyalkylsiloxanes are methyl groups.

Different R¹-groups can be present to give different shell compositions as long as the material achieves the desired softening range as explained below.

In the most preferred embodiment, the shell of the spherical particles of the core/shell type and the particles consisting of polyalkylsiloxane consists of polymethylsilsesquioxane. That is, the amount of T-units and the amount of methyl-groups is approximately 100 %. The most preferred polyalkylsiloxane either as shell in the core/shell type particles or in the particles consisting of polyalkylsiloxane is polymethylsilsesquioxane, in particular the form obtained in accordance with US 4,528,390.

The term "surface" as used in the description of the spherical particles in the present invention usually means the surface of the particles spheres, visible in the light micrograph. However, in some cases the spherical particles may have an additional porosity. In such cases in the core/shell type particles of the invention at least the outer sphere surface is coated with the shell material.

The surface thickness of the core/shell type particles is preferably one to two molecule layers.

In a preferred embodiment the spherical particles essentially have no functional groups reactive with the binder system on the outer sphere surface thereof.

The suitable spherical particles should have a softening point which is at least 50 °C higher than the curing temperature of the coating composition. If for example the curing temperature of the binder system is 40 to 250° C the softening should be at least 90 to 300° C. The reason is that upon film-forming of the aqueous coating composition the particles should maintain their spherical shape.

The softening point is measured as by a differential scanning calorimeter as Tₘ, e.g the glass transition equilibrium point between plastic or elastomeric and crystalline phase transition. Therefore a crosslinked binder matrix with Tₘ-value of less than 40 °C is preferred. The softening point as used in the present invention is measured with a heating rate 5° K per minute.

The particles should have preferably a softening point of more than 300 °C preferably more than 500°C, and are usually insoluble in all solvents and preferably they have a refractive index of 1,35 - 1,50. The preferred polyalkylsiloxanes used in the particles are inmiscible with binder and are not degradable during coating to low volatile siloxanes.

The term "spherical particles" as mentioned in the present invention shall mean such particles which have upon microscopical observation a nearly spherical geometry. The term spherical in the meaning of the present invention shall include however also slightly deviations of the ideal spherical shape and includes for example ellipsoids wherein the ratio of the minimum and maximum diameter is down to 0.6 (see figures 1 and 2). The preferred spherical particles have no sharp edges or fracture edges at the surface thereof caused by milling processes and the like.

The average particle size of the spherical particles is suitably about 0.1 to about 100 micron, preferably 0.1 to 20 micron. It is difficult to prepare powders having an average particle size of less than 0.1 µm according to the cited patent. Powders having the average particle size of more than 100 micron will sometimes not give films with the required strength and flexibility. Preferably the spherical particles have an average particle size from about 1 to about 20 µm. Working outside the preferred range may result in a higher coefficient of friction, or a higher abrasion of the cured coating composition (see figures 1 and 2).

The polyalkylsiloxane particles of this invention should be added suitably to the water-based coating composition at a level of 0,02 to 25 weight-% of the total composition, or 1 to 45 weight-% of the total solids content of the composition. Preferred are compositions with 2 to 17 weight-% of the total solids content of the aqueous composition. Most preferred compositions with optimal slip properties contain 6 to 15 weight-% of the total solids content of the aqueous composition or 15 to 35 weight-% of the total solids content of the composition of the polyalkylsiloxane particles.

The spherical polyalkylsiloxane particles used in the invention are an essential component in imparting the desired properties. They affords good surface slip properties regardless of the method of coating and the thickness of the coated layer. They are also easily dispersable in the water-based polymer system and if, after storage for a long period, deposited may easily be redispersed.

Optionally, a curing catalyst, pigments, fillers and functional additives may be included in the aqueous coating composition. The spherical particles, the aqueous coating composition and optionally catalyst, pigments, filler and functional additives are being mixed and blended to low viscous dispersions with less than 300 mPa.s, preferred less than 50 mPa.s, at 25°C (shear rate D = 1 s⁻¹) resulting in a slight yielding / thixotropy appearance able to pass a 200 µm sieve.

The optional catalyst can be any of the known substances capable of accelerating the reactions of isocyanates or blocked isocyanates with alcohol or amine functionalities, these are divers metallorganic tin-, titanium-, calcium- or zinc-catalysts, such as dibutyltin diacetate, dibutyltin dioctoate, dibutyltin dilaurate, dibutyltin diesterate, tributyltin acetate, tributyltin octoate, tributyltin laurate, dioctyltin diacetate, dioctyltin dilaurate, diethyltin oleate, monomethyltin dioleate, etc. and various tertiary amines.

The coating compositions according to the invention may contain optional auxiliaries and functional additives, such as, for example, inorganic and organic pigments and fillers, dyes, biocidal stabilizers, leveling agents, flow additives, deaeraters or antifoams, ionic and nonionic viscosity regulators, emulsification surfactants and adhesion additives. Adhesion additives embrace ionic polymers, halogenpolyolefines or isocyanurates.

A preferred aqueous coating composition of the invention comprises:
based on the total solids content:
> 20 weight-% of a film forming binder system (crosslinkable resin(s) and optionally crosslinking agent(s))
0 - 35 weight % additives (catalysts, hardners, pigments, leveling additives, emulsifiers, adhesion additives, etc.)
1-45 weight % spherical polyalkylsiloxane particles (which term shall include also the coated polysiloxane particles)
whereas these total solids are 2 to 55 weight %, preferably 20-50 weight %, of the total of the aqueous coating composition. This corresponds to a content of volatiles (esentially water, optionally solvents and compatibilizers as described abobe) of 45 to 98, preferably 50 to 80 % by weight based on the total weight of the composition.

The present invention further relates to a process for the manufacture of seals having a surface coating, which comprises:
- preparing the aqueous coating composition to be used in the present invention as described above,
- applying said aqueous coating composition onto the surface of a seal substrate, and
- forming a film from said aqueous coating composition onto said substrate to obtain the surface-coated seal.

A preferred embodiment of the process for the manufacture of seals comprises:
- preparing a first component by mixing at least one polyisocyanate or a composition thereof or at least one polyol and/or polyamine or a composition thereof with said spherical particles,
- subsequently mixing said first component with either at least one polyisocyanate or a composition thereof or at least one polyol and/or polyamine or a composition thereof to obtain an aqueous coating composition,
- applying said aqueous coating composition on the surface of a seal substrate, and
- forming a film from said aqueous coating composition onto said substrate to obtain the surface-coated seal.

A still more preferred embodiment of the process for the manufacture of seals comprises mixing at least one polyol and/or polyamine or a composition thereof with said spherical particles and subsequently mixing the composition obtained with at least one polyisocyanate or a composition thereof.

In another preferred embodiment there is mixed a binder dispersion with a dispersion of blocked polyisocyanate (one component system) and the sperical particles. Such compositions have a certain storage stability.

The film forming conditions depend on the binder system used. Usually the curing or drying temperatures are preferably 40-250°C, preferably 40 to 160°C.

The seal substrates to be coated in accordance with the present invention include elastomeric or flexible substrates, for example, vulcanized, partially vulcanized or non-vulcanized rubbers, e.g. those based on ethylene-propylene-diene (EPDM) or styrene-butadiene rubber, other synthetic or natural rubbers, thermoplastic elastomers, leather, leather substitutes and other flexible substrates. Among the vulcanized elastomers one can coat peroxide vulcanized as well as sulfur vulcanized types. The flexible or elastomeric substrates of the present invention are characterized by an elongation of more than 50 %. The seals in accordance with present invention do not include rigid substrates for examp-le duroplastics, wood, minerals or metal substrates.

The seal substrates are preferably at room temperature elastomeric shaped articles, which are obtained for example by moulding, extrusion, calandering. The shaped articles may include sheets, profiles, O-rings etc.

The aqueous coating composition to be used in accordance with the present invention may be applied by standard methods, for example by brushing, spray coating, spread coating or knife coating at temperatures between 1 to 98 °C.

The aqueous coating composition used in the invention is applied onto the seal substrates to yield suitable dry film thicknesses of 0.1 µm to 100 µm, preferably 1 to 50 µm, preferably 5 to 20 µm.

The present invention further relates to a seal comprising the aqueous coating composition as defined above which has been cured onto a seal substrate.

The seals of the present invention are particularly applicable as seals for the sealing of preferably movable parts, for example, wheather strip coatings, in particular for car doors or car bonnets or sliding or sunshine roofs of cars, glass runs for windows in particular door windows for vehicles, rubber seals for any vehicle doors and windows, car interior parts and coverings, including dashboards and door side panels, natural and artificial leather coatings and the like.

### Examples:

### Example 1

### Preparation of the Polyol Solution

74.2 parts of an equal mixture of two polyols (Bayderm Finish and Aquaderm Matting LH), 3.5 part of a black pigment paste (Euderm Schwarz DB), 1.7 parts of a leveling additive (Slipadditive 2229W), 0.14 parts of a polyethersiloxane flow additive, 0.06 parts of a defoamer were mixed thoroughly until homogeneous.

Then 12 parts of a polyalkylsiloxane powder, prepared from methyltrimethoxysilane by hydrolysis according to the method of US 4,528,390 example 1, with a median particle size of 6 microns was added and dispersed using a dissolver blade stirrer until homogeneous.

Finally, 2.4 parts of 10% emulsion of a dibutyltin dicarboxylate catalyst emulsion (Baysilone Paint Hardener LH10) and 3 parts of a 30 % emulsion of a chlorinated polyolefin as adhesion additive and 4.75 parts of deionized water were added and mixed until homogeneous.

The polyol solution was a storage stable, homogeneous dispersion with a specific gravity at 20 °C of 1,05 g/ml, a solids content of 35 % and a viscosity at 23 °C of ca. 20 mPa.s.

### Preparation of the Coating Solution

The aqueous protective coating dispersion was prepared by mixing thoroughly 92 parts of the above polyol dispersion with 10 parts of a 45 % solution of hydrophilic aliphatic isocyanate in butanone (Baygen Hardener A) with an NCO content of 8 % under mild shear and filtration through a 200 micron filter cloth.

### Coating Application

The above coating was applied by spray gun to 3 mm thick sheets of cured EPDM (ethylene-propylene-diene rubber) at 25 °C and air dried to give a dry coating thickness of 10-15 micron. The coating was then cured at 160 °C for 2 minutes in an air circulation oven.

### Coating Testing

The coating properties were evaluated by a series of tests summarized below in Tab.1.

**Tab. 1**

| **Property** | **Test method** | **Result-example 1** |
|---|---|---|
| Appearance | Manual | Matt, homogeneous |
| Feel | Manual | smooth, soft |
| Cross-Cut Adhesion | DIN 53151 | 0 (pass) |
| Abrasion | AATCC CM-5 5000 cycles | OK (pass- **) |
| resistance | Crock Meter against glass | |
| Coefficient of Friction | DIN 53375 against glass | 0.24 |
| Storage stability, | 3 months at 20 °C | OK |

| | | |
|---|---|---|
| ** Crock Meter is a standardized testing equipment from Atlas Comp. USA, pass means no visible abrasion. | | |

The coating solution of the current example exhibit good storage stability (without crosslinker) and do not need to be redispersed after standing. The cured coating is smooth, homogeneous and soft to the touch. The abrasion resistance against both glass and painted metal is excellent giving no abrasion or change in the coating surface appearance after 5000 cycles with a standard Crock Meter (900 g weight). The dynamic coefficient of friction is very low, consistently giving values significantly less than 0.3 in repeated tests and coating experiments.

In addition this coating showed excellent weathering performance, resulting in no change in appearance or performance after exposure to UV irradiation. The freeze release behavior and solvent resistance were excellent. The coating gave no change in appearance or loss of adhesion upon elongation of the EPDM strip by 100 %.

### Example 2

The polyol coating dispersion of example 1 was prepared in the same way but the aqueous protective coating solution was prepared by mixing thoroughly 92 parts of the above polyol solution with 10 parts of a freshly prepared 40% dispersion of a solventless hydrophilic aliphatic polyisocyanate (Bayhydur N 3100 with an NCO content of 17,2 %) in water under mild shear and filtration through a 200 micron filter cloth. The coating solution was applied by spray gun to EPDM rubber sheets, air dried and cured as in Example 1. The coated and cured EPDM sheets gave comparable results as in Example 1 .

### Example 3

The polyol coating dispersion of example 1 was prepared in the same way but using only 6 parts of the same polyalkylsiloxane powder instead of 12 parts.

The aqueous protective coating dispersion was prepared by mixing thoroughly 86 parts of the above polyol dispersion with 10 parts of hydrophilic aliphatic isocyanate solution under mild shear and filtration through a 200 micron filter cloth.

The coating dispersion was applied by spray gun to EPDM rubber sheets, air dried and cured as in Example 1. The coated and cured EPDM sheets gave the following results of Tab.2:

**Tab. 2**

| **Property** | **Test method** | **Result example 3** |
|---|---|---|
| Appearance | Manual | matt, homogeneous |
| Feel | Manual | smooth, soft |
| Cross-Cut Adhesion | DIN53151 | 0 (pass) |
| Abrasion | AATCC CM-5 5000 cycles | OK (pass) |
| resistance | Crock Meter against glass | |
| Coefficient of Friction | DIN 53375 against glass | 0.35 |
| Storage stability, | 3 months at 20°C | OK |
| RT | | |

The coating dispersions of the current example exhibit good storage stability. The cured coating is smooth, homogeneous and soft to the touch. The abrasion resistance is excellent giving no abrasion or change in the coating surface appearance after 5000 cycles with a standard Crock Meter. The dynamic coefficient of friction is somewhat higher than in Example 1.

### Example 4

The polyol coating dispersion of example 1 was prepared in the same way but using 12 parts of the polyalkylsiloxane powder with a mean particle size of 12 microns instead of 6 microns.

The aqueous protective coating dispersion was prepared by mixing thoroughly 92 parts of the above polyol dispersion with 10 parts of hydrophilic aliphatic isocyanate solution under mild shear and filtration through a 200 micron filter cloth.

The coating dispersion was applied by spray gun to EPDM rubber sheets, air dried and cured as in Example 1. The coated and cured EPDM sheets gave the following results of tab. 3.

**Tab. 3**

| **Property** | **Test method** | **Result example 4** |
|---|---|---|
| Appearance | Manual | matt, homogeneous |
| Feel | Manual | smooth, soft |
| Cross-Cut Adhesion | DIN 53151 | 0 (pass) |
| Abrasion | AATCC CM-5 5000 cycles | OK (pass) |
| resistance | Crock Meter against glass | |
| Coefficient of Friction | DIN 53375 against glass | 0.20 |
| Storage stability, | 3 months at 20 °C | OK |

The coating dispersions of the current example exhibit good storage stability. The cured coating is smooth, homogeneous and soft to the touch. The abrasion resistance against both glass and painted metal is excellent giving no abrasion or change in the coating surface appearance after 5000 cycles with a standard Crock Meter. The dynamic coefficient of friction is lower than in Example 1.

### Example 5 (Comparative example)

The polyol coating dispersion of example 1 was prepared in the same way but without any polyalkylsiloxane particle powder.

The coated and cured EPDM sheets gave the following results of tab.4.

**Tab. 4**

| **Property** | **Test method** | **Result example 5** |
|---|---|---|
| Appearance | Manual | matt, homogeneous |
| Feel | Manual | Hard |
| Cross-Cut Adhesion | DIN 53151 | 0 (pass) |
| Abrasion | AATCC CM-5; 5000 | OK (pass) |
| resistance | cycles Crock Meter against | |
| | glass | |
| Coefficient of Friction | DIN 53375 against glass | 0.58 |
| Storage stability, | 3 months at 20 °C | OK |

The coating dispersion of the current example exhibit good storage stability. The cured coating is, however, hard to the touch. The abrasion resistance is excellent, while the dynamic coefficient of friction is significantly higher than in the inventive Examples 1-4.

### Examples 6 and 7 (Comparative Examples)

The polyol coating dispersion of example 1 was prepared in the same way but using 12 parts of alternative powdered slip additives instead of the polyalkysiloxane powder.
The aqueous protective coating dispersions were prepared by mixing thoroughly 92 parts of the above polyol solutions with 10 parts of hydrophilic aliphatic isocyanate of example 1 solution under mild shear and filtration through a 200 micron filter cloth.

The coating dispersions were applied by spray gun to EPDM rubber sheets, air dried and cured as in Example 1. The coated and cured EPDM sheets gave the following results of tab. 5

**Tab. 5**

| **Property** | **Example 6** | **Example 7** |
|---|---|---|
| **Additive (12 pt)** | Nylon powder* | PTFE Powder** |
| Appearance | Rough | OK |
| Feel | Hard, rough | Almost soft |
| Adhesion | 2 (failed) | Pass |
| Abrasion resistance | Pass | Pass |
| Coefficient of Friction against glass | 0,30 | 0,44 |

| | | |
|---|---|---|
| * Vestosint^{R} 2159, mean particle size of 10 micron. ** Hostaflon^{®} TF9205, a mean particle size of 8 micron. | | |

It is evident from these comparative examples that substitution of the polyalkylsiloxane powder with Nylon powder leads to poor appearance and adhesion. Also the coefficient of friction does not reliably meet the market need for values of < 0.3. The fluorocarbon powder gives a coating appearance and feel that is improved over the coating without additive, but the dynamic coefficient of friction is high.

### Examples 8 and 9 (Comparative Examples)

The polyol coating dispersion of example 1 was prepared in the same way but using 12 parts of alternative silicone based slip additives instead of the polyalkylsiloxane powder.

The aqueous protective coating dispersions were prepared by mixing thoroughly 92 parts of the above polyol solutions with 10 parts of hydrophilic aliphatic isocyanate solution under mild shear and filtration through a 100 micron filter cloth.

The coating dispersions were applied by spray gun to EPDM rubber sheets, air dried and cured as in Example 1. The coated and cured EPDM sheets gave the following results of tab. 6.

**Tab.6**

| **Property** | **Example 8** | **Example 9** |
|---|---|---|
| **Additive (12 pt)** | Polydimethyl siloxane*** | Aminofunctional Polydimethylsiloxane**** |
| Appearance | OK | OK |
| Coefficient of Friction against glass | 0,45 | 0,48 |
| Storage stability | OK | Gelled |

| | | |
|---|---|---|
| *** Polydimethylsiloxane Emulsion SM 2112 from GE Silicones. **** Aminofunctional siloxane Emulsion TP3488 from GE Bayer Silicones GmbH | | |

Polydimethylsiloxane additives both give cured coatings with undesirably high values for the coefficient of friction. In addition, the polyol dispersion of the aminofunctional siloxane gelled upon storage at room temperature.

### Materials List:

Bayderm^{®} Finish is a 35 % solids dispersion of a ionically modified aliphatic polyesterurethane polyol with a OH content of 1,0 % per solids, <50 mPa.s, pH 7,5 sold by Bayer AG, Leverkusen Germany.
Aquaderm^{®} Matting LH is a 35 % solids dispersion OH content of 0,75% per solids, 25% solids 5000-8000 mPa.s, pH 8,5 of an aliphatic polyurethane polyol and an inorganic matting agent sold by the Bayer AG, Leverkusen Germany.
Euderm^{®} Schwarz DB is a carbon black pigment slurry with 16 % solids sold by the Bayer AG, Leverkusen Germany.
Baysilone^{®} Paint Hardener LH10 is a 10 % aqueous emulsion of dibutyltin dilaurate sold by Borchers GmbH, Monheim Germany.
Bayhydur N3100 is a 100% hydrophilic, nonionic aliphatic polyisocyanate with an NCO-content of 17,2 % sold by Bayer AG, Leverkusen Germany.
Baygen Hardener A is a 45 % solution of a nonionic hydrophilic aliphatic polyisocyanate in butanone with an NCO content of 8 % sold by Bayer AG, Leverkusen Germany.
Slipadditive 2229W is a 60 % solids leveling additive sold by Rheinchemie GmbH, Mannheim Germany.
Baysilone^{®} Emulsion TP 3488 is an aminopropyl functional polydimethylsiloxane sold by GE Bayer Silicones GmbH, Leverkusen Germany.
Emulsion SM 2112 is a SiOH-terminated polydimethylsiloxane gum emulsion sold by GE Silicones of Waterford, USA.
Hostaflon^{®} 9205 is a Polyfluorocarbon PTFE- powder with a mean particle size of 8 micron sold by Dyneon GmbH, Kelsterbach Germany.
Vistosint^{®} 2159 is a Nylon 12 powder with a mean particle size of 10 micron sold by Degussa-Hüls AG of Marl, Germany.

## Claims

1. Use of an aqueous coating composition, comprising
- a film forming binder system, containing at least one crosslinkable resin and optionally at least one crosslinking agent, and
- spherical particles of at least one polyalkylsiloxane comprising R¹-SiO_{3/2} groups, whereby R¹ is C1-C18 alkyl, and/or spherical particles of at least one polysiloxane which are coated with at least one polyalkylsiloxane comprising R¹-SiO_{3/2} groups, whereby R¹ is C1-C18 alkyl, for the manufacture of surface coatings of seals.

2. Use of an aqueous coating composition according to claim 1, wherein the crosslinkable resin is selected from the group of polyester, polyether, polyesterether, polycarbonate, polyamide, polyesteramide, polyacrylate, and polyurethane each of which optionally may comprise segments of different polymeric groups.

3. Use of an aqueous coating composition according to claim 1 or 2, wherein the crosslinkable resin is a polyurethane which optionally comprises segments of polyester, polyether, polycarbonate and polyesteramide and having crosslinkable functional groups.

4. Use according to claim 3, wherein the crosslinkable functional groups are selected from the group consisting of active hydrogen containing functional groups, olefinically unsaturated groups, isocyanate groups and epoxy groups.

5. Use according to claim 4, wherein the crosslinkable functional groups are active hydrogen containing functional groups selected from hydroxyl and amino groups.

6. Use according to any of claims 1 to 5, wherein the crosslinking agent is selected from the group consisting of blocked or unblocked polyisocyanate, polyepoxides, aminoplasts, phenol/formaldehyde adducts, carbamates, compounds having at least two cyclic carbonate groups, polyols and polyanhydrides.

7. Use according to any of claims 1 to 6, wherein the crosslinkable resin is a polyol and/or polyamine and the crosslinking agent is a polyisocyanate.

8. Use according to any of claims 1 to 7, wherein the spherical particles of polyalkylsiloxane consist of a crosslinked polyalkylsiloxane prepared by the hydrolysis, condensation, polymerisation and/or crosslinking of alkylsilanes or alkylsiloxanes.

9. Use according to any of claims 1 to 8, wherein the spherical particles have a softening point which is at least 50 °C higher than the curing temperature of the coating composition.

10. Use according to any of claims 1 to 9, wherein the polyalkylsiloxane is polymethylsilsesquioxane.

11. Use according to any of claims 1 to 10, wherein the particle size of the spherical particles is from about 1 to about 20 µm.

12. Use according to any of claims 1 to 11, wherein the spherical particles essentially have no functional groups reactive with the binder system on the surface thereof.

13. A process for the manufacture of seals having a surface coating, which comprises:
- preparing an aqueous coating composition as defined in any of claims 1 to 12,
- applying said aqueous coating composition onto the surface of a seal substrate, and
- forming a film from said aqueous coating composition onto said substrate to obtain the surface-coated seal.

14. A process for the manufacture of seals coated with a polyurethane-containing surface coating according to claim 13, which comprises:
- preparing a first component by mixing at least one polyisocyanate or a composition thereof or at least one polyol and/or polyamine or a composition thereof with said spherical particles,
- subsequently mixing said first component with either at least one polyisocyanate or a composition thereof or at least one polyol and/or polyamine or a composition thereof to obtain an aqueous coating composition,
- applying said aqueous coating composition on the surface of a seal substrate, and
- forming a film from said aqueous coating composition onto said substrate to obtain the surface-coated seal.

15. The process according to claim 14, which comprises mixing at least one polyol and/or polyamine or a composition thereof with said spherical particles and subsequently mixing the composition obtained with at least one polyisocyanate or a composition thereof.

16. The process according to any of claims 13 to 15, wherein the seal substrates are shaped articles, which are elastomeric at room temperature.

17. Sealant comprising the aqueous coating composition as defined in any of claims 1 to 12 which has been cured onto a sealant substrate.

18. Use of the sealants according to claim 17 for sealing of movable parts.

## Patentansprüche

1. Verwendung einer wässrigen Beschichtungszusammensetzung, enthaltend:
- ein filmbildendes Bindemittelsystem, enthaltend mindestens ein vernetzbares Harz und wahlweise mindestens einen Vernetzer und
- kugelförmige Teilchen mindestens eines Polyalkylsiloxans, enthaltend R¹-SiO_{3/2}-Gruppen, worin R¹ C₁-C₁₈-Alkyl ist, und/oder kugelförmige Teilchen mindestens eines Polysiloxans, die mit mindestens einem Polyalkylsiloxan, enthaltend R¹-SiO_{3/2}-Gruppen, worin R¹ C₁-C₁₈-Alkyl ist, beschichtet sind, für die Herstellung von Oberflächenbeschichtungen von Dichtungen.

2. Verwendung von wässrigen Beschichtungszusammensetzungen nach Anspruch 1, worin das vernetzbare Harz ausgewählt ist aus der Gruppe von Polyester, Polyether, Polyesterether, Polycarbonat, Polyamid, Polyesteramid, Polyacrylat und Polyurethan, wobei jedes wahlweise Segmente anderer polymerer Gruppen enthalte kann.

3. Verwendung einer wässrigen Beschichtungszusammensetzung nach Anspruch 1 oder 2, worin das vernetzbare Harz ein Polyurethan ist, welches wahlweise Segmente von Polyester, Polyether, Polycarbonat und Polyesteramid enthält und vernetzbare, funktionelle Gruppen aufweist.

4. Verwendung nach Anspruch 3, worin die vernetzbaren, funktionellen Gruppen ausgewählt sind aus der Gruppe, die besteht aus : aktiven Wasserstoff enthaltenden, funktionellen Gruppen, olefinisch ungesättigten Gruppen, Isocyanatgruppen und Epoxygruppen.

5. Verwendung nach Anspruch 4, worin die vernetzbaren, funktionellen Gruppen aktiven Wasserstoff enthaltende, funktionelle Gruppen, ausgewählt aus Hydroxyl- und Aminogruppen sind.

6. Verwendung nach irgendeinem der Ansprüche 1 bis 5, worin der Vernetzer ausgewählt wird aus der Gruppe, bestehend aus blockierten oder nicht blockierten Polyisocyanaten, Polyepoxiden, Aminoplasten, Phenol/Formaldehydaddukten, Carbamaten, Verbindungen, die mindestens zwei cyclische Carbonatgruppen aufweisen, Polyolen und Polyanhydriden.

7. Verwendung nach irgendeinem der Ansprüche 1 bis 6, worin das vernetzbare Harz ein Polyol und/oder ein Polyamin ist und der Vernetzer ein Polyisocyanat ist.

8. Verwendung nach irgendeinem der Ansprüche 1 bis 7, worin die kugelförmigen Teilchen der Polyalkylsiloxane aus einem vernetzten Polyalkylsiloxan bestehen, das durch Hydrolyse, Kondensation, Polymerisation und/oder Vernetzung von Alkylsilanen oder Akylsiloxanen hergestellt wird.

9. Verwendung nach irgendeinem der Ansprüche 1 bis 8, worin die kugelförmigen Teilchen ei en Erweichungspunkt haben, der mindestens 50°C höher als die Härtungstemperatur der Beschichtungszusammensetzung ist.

10. Verwendung nach irgendeinem der Ansprüche 1 bis 9, worin das Polyalkylsiloxan ein Polymethylsilsesquioxan ist.

11. Verwendung nach irgendeinem der Ansprüche 1 bis 10, worin die Teilchengröße der kugelförmigen Teilchen ca. 1 bis ca. 20 µm ist.

12. Verwendung nach irgendeinem der Ansprüche 1 bis 11, worin die kugelförmigen Teilchen auf ihrer Oberfläche im wesentlichen keine funktionellen Gruppen aufweisen, die mit dem Bindemittelsystem reagieren.

13. Verfahren zur Herstellung von Dichtungen mit einer Oberflächenbeschichtung, das umfasst :
- Herstellung einer wässrigen Beschichtungszusammensetzung wie in einem der Ansprüche 1 bis 12 definiert,
- Aufbringen der besagten wässrigen Beschichtungszusammensetzung auf die Oberfläche eines Dichtungssubstrates und
- Ausbildung eines Filmes der besagte wässrigen Beschichtungszusammensetzung au dem besagten Substrat, um die oberflächlich beschichteten Dichtungen zu erhalten.

14. Ein Verfahren zur Herstellung von Dichtungen, die mit einer Polyurethan enthaltenden Oberflächenbeschichtung nach Anspruch 13 beschichtet sind, welches umfasst:
- Herstellung einer ersten Komponente durch Mischen von mindestens einem Polyisocyanat oder einer Zusammensetzung davon oder mindestens einem Polyol und/oder Polyamin oder einer Zusammensetzung davon mit den besagten kugelförmigen Teilchen,
- anschließendes Mischen der ersten Komponente mit entweder mindestens einem Polyisocyanat oder einer Zusammensetzung davon oder mindestens einem Polyol und/oder Polyamin oder einer Zusammensetzung davon, um eine wässrige Beschichtungszusammensetzung zu erhalten,
- Aufbringen der besagten wässrigen Beschichtungszusammensetzung auf der Oberfläche eines Dichtungssubstrates und
- Ausbilden eines Filmes aus der besagten wässrigen Beschichtungszusammensetzung auf dem besagten Substrat, um eine oberflächlich beschichtete Dichtung zu erhalten.

15. Verfahren nach Anspruch 14, welches umfasst: Mischen mindestens eines Polyols und/oder polyamines oder einer Zusammensetzung davon mit besagten kugelförmigen Teilchen und anschließendes Mischen der erhaltenen Zusammensetzung mit mindestens einem Polyisocyanat oder einer Zusammensetzung davon.

16. Verfahren nach irgendeinem der Ansprüche 13 bis 15, worin die Dichtungssubstrate Formartikel sind, welche bei Raumtemperatur elastomer sind.

17. Dichtungen, enthaltend die wässrige Beschichtungszusammensetzung wie in irgendeinem der Ansprüche 1 bis 12 definiert, die auf einem Dichtungssubstrat gehärtet wurde.

18. Verwendung der Dichtungen nach Anspruch 17 für das Dichten von bewegbaren Teilen.

## Revendications

1. Utilisation d'une composition aqueuse de revêtement, comprenant :
- un système liant filmogène, contenant au moins une résine réticulable et éventuellement au moins un agent de réticulation et
- des particules sphériques d'au moins un polyalkylsiloxane comportant des groupements R¹-SiO_{3/2}, dans lesquels R¹ représente un groupe alkyle en C₁-C₁₈ et/ou des particules sphériques d'au moins un polysiloxane qui sont revêtues d'au moins un polyalkylsiloxane comportant des groupements R¹-SiO_{3/2}, dans lesquels R¹ représente un groupe alkyle en C₁-C₁₈, pour la fabrication de revêtements de surface de joints.

2. Utilisation d'une composition aqueuse de revêtement selon la revendication 1, dans laquelle la résine réticulable est choisie dans l'ensemble constitué par le polyester, le polyéther, le polyesteréther, le polycarbonate, le polyamide, le polyesteramide, le polyacrylate et le polyuréthane, chacun pouvant éventuellement comporter des segments de différents groupes polymères.

3. Utilisation d'une composition aqueuse de revêtement selon la revendication 1 ou 2, dans laquelle la résine réticulable est un polyuréthane qui comporte éventuellement des segments de polyester, de polyéther, de polycarbonate et de polyesteramide et ayant des groupes fonctionnels réticulables.

4. Utilisation selon la revendication 3, dans laquelle les groupes fonctionnels réticulables sont choisis dans l'ensemble constitué par les groupes fonctionnels contenant de l'hydrogène actif, les groupes à insaturation oléfinique, les groupes isocyanate et les groupes époxyde.

5. Utilisation selon la revendication 4, dans laquelle les groupes fonctionnels réticulables sont des groupes fonctionnels contenant de l'hydrogène actif choisis parmi les groupes hydroxyle et amino.

6. Utilisation selon l'une quelconque des revendications 1 à 5, dans laquelle l'agent de réticulation est choisi dans l'ensemble constitué par le polyisocyanate bloqué ou non bloqué, les polyépoxydes, les aminoplastes, les produits d'addition du phénol avec le formaldéhyde, les carbamates, les composés ayant au moins deux groupes carbonate cycliques, les polyols et les polyanhydrides.

7. Utilisation selon l'une quelconque des revendications 1 à 6, dans laquelle la résine réticulable est un polyol et/ou une polyamine et l'agent de réticulation est un polyisocyanate.

8. Utilisation selon l'une quelconque des revendications 1 à 7, dans laquelle les particules sphériques de polyalkylsiloxane consistent en un polyalkylsiloxane réticulé préparé par hydrolyse, condensation, polymérisation et/ou réticulation d'alkylsilanes ou d'alkylsiloxanes.

9. Utilisation selon l'une quelconque des revendications 1 à 8, dans laquelle les particules sphériques ont un point de ramollissement qui est au moins 50°C supérieur à la température de durcissement de la composition de revêtement.

10. Utilisation selon l'une quelconque des revendications 1 à 9, dans laquelle le polyalkylsiloxane est le polyméthylsilsesquioxane.

11. Utilisation selon l'une quelconque des revendications 1 à 10, dans laquelle la granulométrie des particules sphériques est d'environ 1 à environ 20 µm.

12. Utilisation selon l'une quelconque des revendications 1 à 11, dans laquelle les particules sphériques n'ont essentiellement aucun groupe fonctionnel réactif vis-à-vis du système liant sur leur surface.

13. Procédé de fabrication de joints ayant un revêtement de surface, qui consiste à :
- préparer une composition aqueuse de revêtement telle que définie dans l'une quelconque des revendications 1 à 12,
- appliquer ladite composition aqueuse de revêtement sur la surface d'un substrat de joint et
- former un film à partir de ladite composition aqueuse de revêtement sur ledit substrat pour obtenir le joint revêtu en surface.

14. Procédé de fabrication de joints revêtus d'un revêtement de surface contenant du polyuréthane selon la revendication 13, qui consiste à:
- préparer un premier composant en mélangeant au moins un polyisocyanate ou une composition de celui-ci ou au moins un polyol et/ou une polyamine ou une composition de celui-ci, celle-ci ou ceux-ci avec lesdites particules sphériques,
- mélanger ensuite ledit premier composant avec au moins un polyisocyanate ou une composition de celui-ci ou au moins un polyol et/ou une polyamine ou une composition de celui-ci, celle-ci ou ceux-ci pour obtenir une composition aqueuse de revêtement,
- appliquer ladite composition aqueuse de revêtement sur la surface d'un substrat de joint et
- former un film à part de ladite composition aqueuse de revêtement sur ledit substrat pour obtenir le joint revêtu en surface.

15. Procédé selon la revendication 14, qui consiste à mélanger au moins un polyol et/ou une polyamine ou une composition de celui-ci, elle-ci ou ceux-ci avec lesdites particules sphériques et mélanger ensuite la composition obtenue avec au moins un polyisocyanate ou une composition de celui-ci.

16. Procédé selon l'une quelconque des revendications 13 à 15, dans lequel les substrats de joint sont des articles façonnés, qui sont élastomères à température ambiante.

17. Matériau de scellage comprenant la composition aqueuse de revêtement telle que définie dans l'une quelconque des revendications 1 à 12 qui a été durci sur un substrat de matériau de scellage.

18. Utilisation des matériaux de scellage selon la revendication 17 pour le scellage de pièces mobiles.
